# EUROPEAN PATENT SPECIFICATION

(11) **EP 2 979 892 B1**
(45) Date of publication and mention of the grant of the patent: **18.10.2017**
(21) Application number: 15174341.6
(22) Date of filing: 29.06.2015
(51) Int. Cl.: B42C 9/00, B42C 1/12

(54) **SHEET BINDING DEVICE**
BLATTBINDUNGSVORRICHTUNG
DISPOSITIF DE FIXATION DE FEUILLE

(30) Priority: 29.07.2014 JP 2014154180
(43) Date of publication of application: 03.02.2016
(73) Proprietor: Kabushiki Kaisha Toshiba, Tokyo 105-8001 (JP); Toshiba TEC Kabushiki Kaisha, Tokyo 141-0032 (JP)
(72) Inventor: TERAO, Yasunobu, Shinagawa-ku, Tokyo 141-0032 (JP)
(74) Representative: Takeuchi, Maya

(56) References cited:
- JP-A- 2001 187 491
- US-A1- 2008 185 773

## Description

### FIELD

Embodiments described herein relate generally to a technique for binding multiple sheets by using an adhesive such as paste.

### BACKGROUND

In the related art, post-processing apparatuses are known which perform various types of post-processing on a sheet on which an image is formed in an image forming apparatus.

One of the above-described post-processing apparatuses in the related art has a function of binding a sheet bundle having multiple sheets by using staples.

An example of related art includes JP-A-2009-202485.

US 2008/185773 A1 discloses the preamble of claim 1.

### DESCRIPTION OF THE DRAWINGS

FIG. 1 is a schematic vertical cross-sectional view of a post-processing apparatus according to a non-claimed first embodiment.
FIG. 2 is an exploded perspective view illustrating a schematic configuration when the vicinity of a binding unit is viewed from a processing tray side.
FIG. 3 is an exploded perspective view illustrating details when the vicinity of the binding unit is viewed from the processing tray side.
FIG. 4 is an exploded side view when a positional relationship among the binding unit, the processing tray, and a rotary paddle is viewed in an extending direction of a rotary shaft of the rotary paddle.
FIG. 5 is a partially exploded perspective view for illustrating a configuration of a pasting unit (sheet binding device) in the binding unit.
FIG. 6 is a partially exploded perspective view when the configuration of the pasting unit illustrated in FIG. 5 is viewed from another angle.
FIG. 7 is an exploded perspective view illustrating details of a configuration of a first support mechanism and a second support mechanism described below.
FIG. 8 is a view illustrating an example of a control block of the post-processing apparatus including the sheet binding device according to the embodiment.
FIG. 9 is a flowchart for illustrating a process flow in the sheet binding device according to the embodiment.
FIG. 10 is an exploded perspective view illustrating a state where a holding unit is located at a "first retreat position".
FIG. 11 is an exploded perspective view illustrating a state where the holding unit is located at the "first retreat position".
FIG. 12 is an exploded perspective view illustrating a state where the holding unit is located at an "adhesive application position".
FIG. 13 is an exploded perspective view illustrating a state where the holding unit is located at the "adhesive application position".
FIG. 14 is a transition diagram illustrating a transition of an operation of each configuration component when a pasting operation is performed on a sheet of the first page.
FIG. 15 is a timing chart illustrating drive control performed by a CPU in a case of sheets except for the last page.
FIG. 16 is a transition diagram illustrating a transition of an operation of each configuration component when a pasting operation is performed on the second to the (n-1)^{th} sheets.
FIG. 17 is an exploded perspective view illustrating a state where a holding unit is located at a "first retreat position" and a shutter member is located at a "second retreat position".
FIG. 18 is an exploded perspective view illustrating details of a rotary operation of a holding arm which is performed by an operation of a second cam.
FIG. 19 is an exploded perspective view illustrating details of the rotary operation of the holding arm which is performed by the operation of the second cam.
FIG. 20 is an exploded perspective view illustrating a state where the shutter member is located at a "shielding position".
FIG. 21 is an exploded perspective view illustrating a state where the shutter member is located at the "shielding position".
FIG. 22 is an exploded perspective view illustrating a state where the holding unit is lowered to an "adhesive application position" while the shutter member is located at the "second retreat position".
FIG. 23 is a transition diagram illustrating a transition of an operation of each configuration component when only pressing is performed on a sheet of the last page.
FIG. 24 is a timing chart illustrating drive control performed by the CPU in a case of the sheet of the last page.
FIG. 25 is a view for illustrating a configuration of the shutter member.
FIG. 26 is a flowchart illustrating a method of correcting deviation of a rotation angle position between the first cam and the second cam.
FIG. 27 is a transition diagram illustrating an operation of each member when the operation of the flowchart in FIG. 26 is performed.
FIG. 28 is a timing chart illustrating content of controlling performed by the CPU when the operation of the flowchart in FIG. 26 is performed.
FIG. 29 is a view illustrating a schematic configuration of a rotary paddle according to a second embodiment according to the present invention.
FIG. 30 is a view for illustrating an operation of the rotary paddle according to the second embodiment.
FIG. 31 is a view for illustrating the operation of the rotary paddle according to the second embodiment.
FIG. 32 is a view for illustrating the operation of the rotary paddle according to the second embodiment.
FIG. 33 is a view for illustrating the operation of the rotary paddle according to the second embodiment.
FIG. 34 is a view for illustrating the operation of the rotary paddle according to the second embodiment.
FIG. 35 is a view for illustrating a disposition in a rotary axis direction of an abutment auxiliary member.
FIG. 36 is a view for illustrating a disposition in the rotary axis direction of the abutment auxiliary member.

### DETAILED DESCRIPTION

However, the sheet bundle bound by using the staples should not be put through a shredder while remaining in the bound state. In addition, even if the staples are removed from the stapled sheet bundle and are intended to be reused as sheets in the image forming apparatus, puncture holes made by the staples adversely affect sheet transport in the image forming apparatus. Consequently, there is a possibility that a sheet jam may occur.

Embodiments described herein are made in order to solve the above-described problem, and an object thereof is to provide a technique for binding multiple sheets by using an adhesive.

In general, according to one embodiment, a sheet binding device includes a processing tray, a rotary paddle, an adhesive application unit, and an abutting assistance member. The processing tray stacks a binding target sheet thereon. The rotary paddle causes the sheet to abut against a predetermined abutting alignment position on the processing tray by rotating while coming into contact with an upper surface of the sheet stacked on the processing tray. The adhesive application unit applies an adhesive to a predetermined area of the upper surface of the sheet abutted against the abutting alignment position. The abutting assistance member is disposed in a same rotary shaft as the rotary paddle, and has such a length so as to interpose a tip end of the sheet between a tip end of the abutting assistance member and the rotary paddle during a time until the tip end of the sheet which is conveyed toward the abutting alignment position by the rotary paddle at least rides on an area of the adhesive applied onto the sheet stacked on the processing tray immediately in front of the sheet. The abutting assistance member may be a film which is more easily separated from the adhesive than the sheet. The abutting assistance member may be provided in the rotary shaft so as to be bent toward an upstream side in a rotation direction of the rotary paddle with respect to a radial direction of the rotary shaft. The abutting assistance member may be provided in the rotary shaft so as to tilt toward an upstream side in a rotation direction of the rotary paddle with respect to a radial direction of the rotary shaft. The abutting assistance member may be provided at a position corresponding to an adhesive application area of the adhesive application unit in a direction of the rotary shaft. The device may further comprise: a temporary tray that is provided above the processing tray, that temporarily places the conveyed sheet thereon, and that drops the temporarily placed sheet onto the processing tray; and a support member that is provided on the rotary shaft, and that supports a tip end of the sheet which is temporarily placed on the temporary tray. The abutting assistance member may be provided on a side surface on an upstream side of the support member in the rotation direction of the rotary paddle. Preferably, the abutting assistance member is a polyester film.

Hereinafter, embodiments will be described with reference to the drawings.

### (First Embodiment)

First, a sheet binding device and a post-processing apparatus (so-called finisher) including the device according to a first embodiment, non-claimed, will be described. The first embodiment is useful for understanding the invention.

### Apparatus Configuration

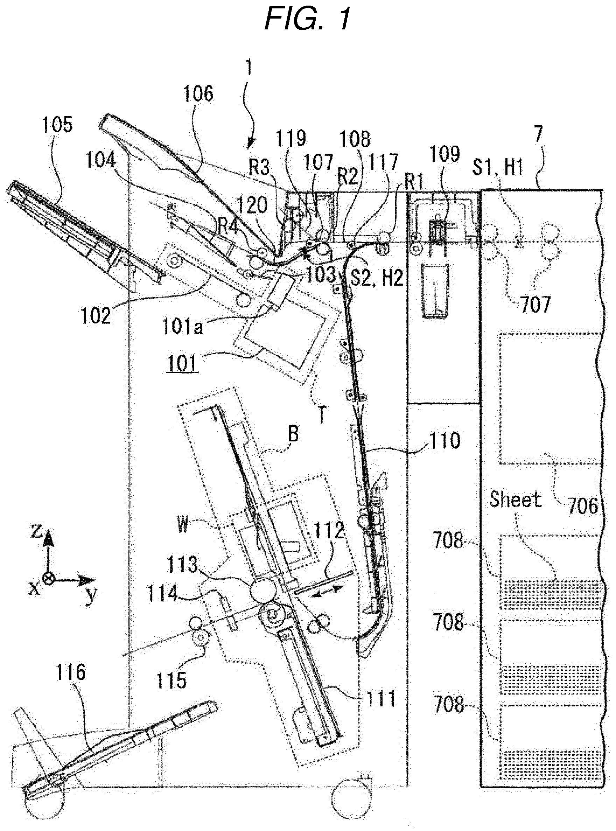

FIG. 1 is a schematic vertical cross-sectional view of a post-processing apparatus 1 according to the first embodiment.

For example, the post-processing apparatus 1 according to the embodiment receives a sheet output from an image forming apparatus 7 which is connected to the post-processing apparatus 1 so as to be communicable, and performs various processes such as binding, folding, and punching on the sheet.

For example, as processing functions, the post-processing apparatus 1 broadly includes a binding unit T, a folding unit B, a stapler W, and a punching unit 109. Here, a configuration where the post-processing apparatus 1 includes the binding unit T, the folding unit B, the stapler W, and the punching unit 109 will be described as an example. However, without being limited thereto, the post-processing apparatus 1 may include at least the binding unit T.

A sheet having an image formed thereon in the image forming apparatus 7 first passes through the punching unit 109. If the sheet is to be punched, the punching unit 109 punches the sheet at this time.

A transport destination of the sheet passing through the punching unit 109 is switched to any one of a transport path 110 and a transport path 108 by a flapper 117.

If only the punching is intended to be performed on the sheet, or if the sheet passing through the punching unit 109 is intended to be discharged outward from the apparatus while remaining intact, the sheet is guided to the transport path 108 by the flapper 117, is further guided to a transport path 119 by a flapper 107, and is discharged onto a first discharge tray 106.

If the binding unit T performs binding on the sheet, the sheet guided to the transport path 108 is further guided to a transport path 120 by the flapper 107, and is discharged onto a temporary tray 104 (so-called buffer tray).

The sheet discharged on the temporary tray 104 is then hit and dropped by a rotary paddle 103 rotating counterclockwise on the paper in FIG. 1, and is stacked on a processing tray 102.

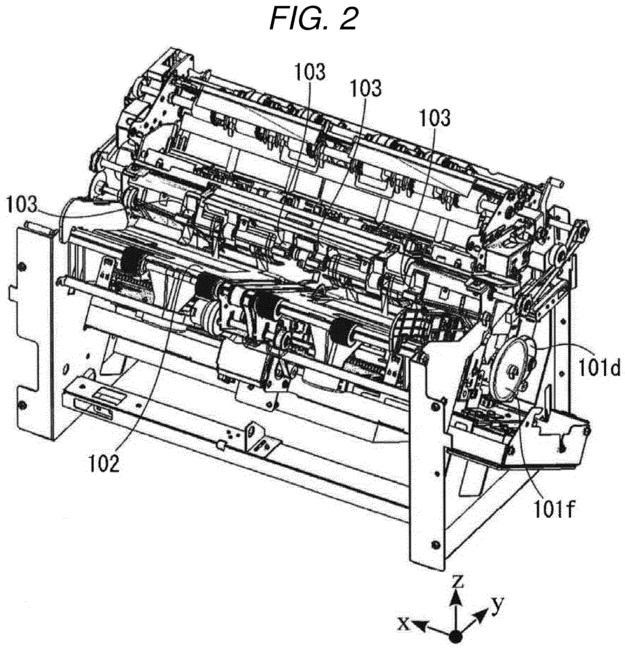

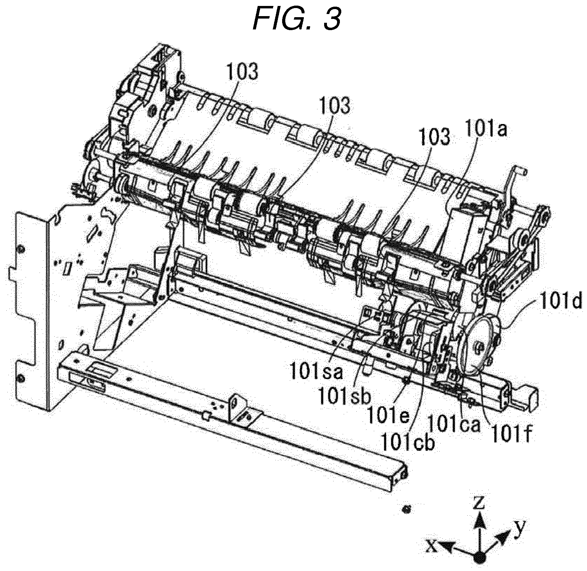

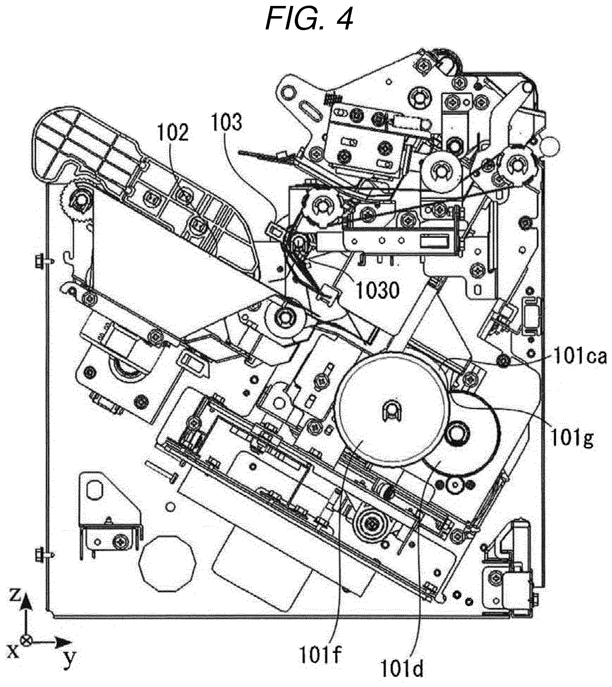

FIG. 2 is an exploded perspective view illustrating a schematic configuration when the vicinity of the binding unit T is viewed from the processing tray 102 side. FIG. 3 is an exploded perspective view illustrating details when the vicinity of the binding unit T is viewed from the processing tray 102 side. In addition, FIG. 4 is an exploded side view when a positional relationship among the binding unit T, the processing tray 102, and the rotary paddle 103 is viewed in an extending direction of a rotary shaft 1030 of the rotary paddle 103.

The binding unit T includes a pasting unit 101 which pastes an upper surface of the sheet stacked on the processing tray 102. The binding unit T causes the pasting unit 101 to paste the upper surface of the sheet each time the sheet is stacked on the processing tray 102. However, for example, if a sheet bundle of 10 sheets is intended to be bound, the upper surface of the tenth sheet (uppermost sheet stacked for the tenth time) is not pasted.

If all sheets except for the uppermost sheet within multiple binding target sheets stacked on the processing tray 102 are completely pasted, all the multiple sheets configuring a binding target sheet bundle which are in an overlapped and stacked state are pressed toward the processing tray 102 by the binding unit T. Here, the pasting unit 101 causes an adhesive to adhere onto the sheet. A pressing mechanism presses the multiple sheets, and causes the adhesive to firmly adhere to (crimp) a portion between the adjacent sheets, thereby completing the sheet binding.

If folding or stapling is intended to be performed on the sheet passing through the punching unit 109, the flapper 117 guides the sheet to the transport path 110, and the stapler W performs stapling or the folding unit B performs folding on the sheet discharged on to a stacker 111. Specifically, for example, the folding unit B causes a folding blade 112 and a folding roller 113 to fold the sheet bundle on which the stapler W performs the stapling, and causes additional folding rollers 114 to further interpose a folding line therebetween. Thereafter, discharge rollers 115 discharge the folded sheet bundle onto a third discharge tray 116.

The sheet bundle having the multiple bound sheets is then discharged onto a second discharge tray 105 by a discharge member (not illustrated) disposed in the processing tray 102.

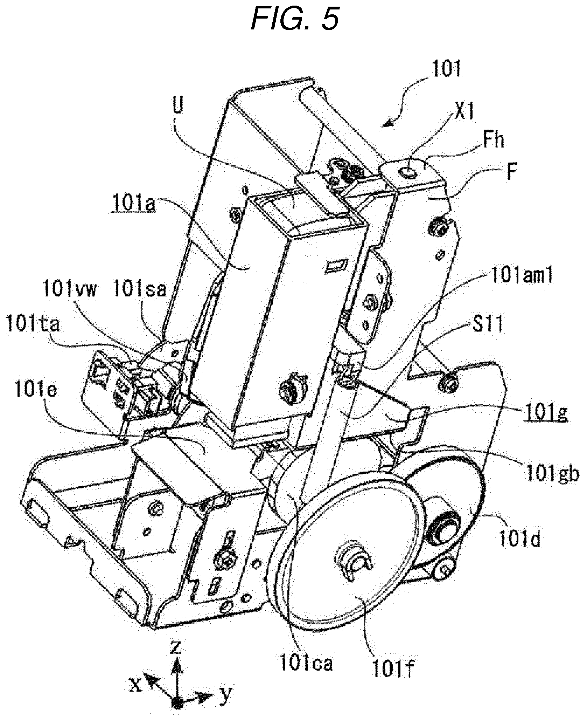

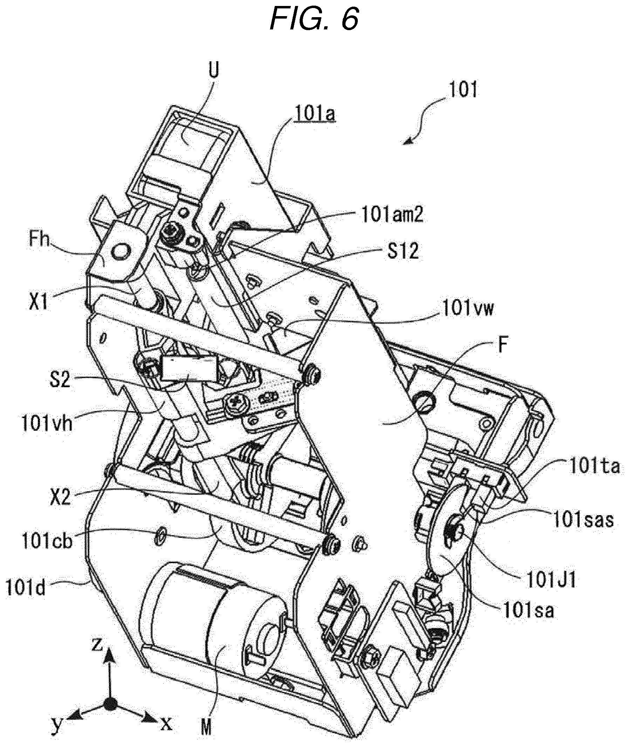

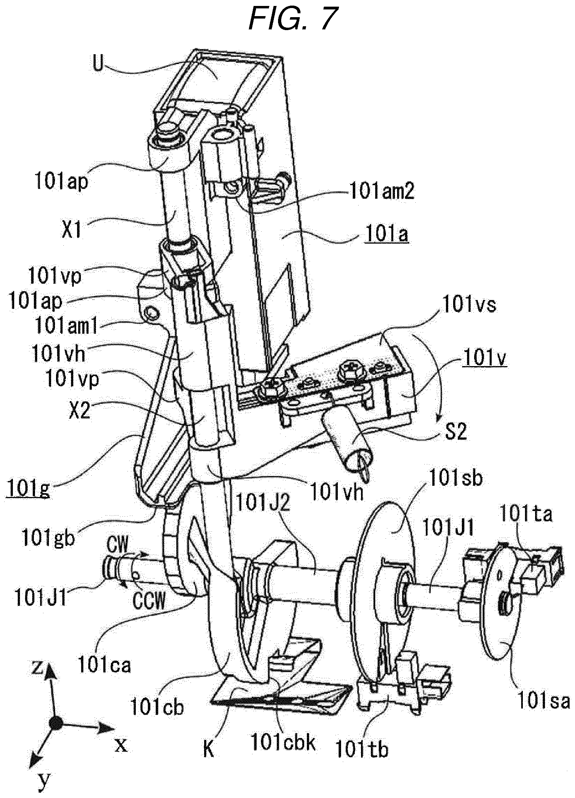

FIG. 5 is a partially exploded perspective view for illustrating a configuration of the pasting unit 101 (sheet binding device) in the binding unit T. FIG. 6 is a partially exploded perspective view when the configuration of the pasting unit 101 illustrated in FIG. 5 is viewed using another angle. FIG. 7 is an exploded perspective view illustrating details of a configuration of a first support mechanism and a second support mechanism (to be described later).

As illustrated in FIG. 5, for example, the pasting unit 101 includes an adhesive application unit U, the first support mechanism, a shutter member 101vw, and the second support mechanism.

The adhesive application unit U is a pasting unit which causes paste serving as the adhesive for bonding the sheets to adhere to the sheets. Specifically, for example, the pasting unit may employ a method of applying the paste by bringing a mesh containing liquefied paste into contact with the sheets. The adhesive application unit U applies the adhesive to a predetermined region on the upper surface of the sheets abutting onto an abutting alignment position in the processing tray 102.

For example, the first support mechanism includes a frame F, a guiding shaft X1, a holding unit 101a, tensile springs S11 and S12, a first rotary shaft 101J1, a first cam 101ca, a receiving unit 101g, and a motor M.

Specifically, in the first support mechanism, both ends of the guiding shaft X1 are supported by the frame F. The adhesive application unit U is accommodated inside the holding unit 101a having a container shape which is slidingly supported by the guiding shaft X1 so as to be freely lifted and lowered. The guiding shaft X1 extends in a direction moving forward to and rearward from the sheet of the adhesive application unit U serving to apply the adhesive.

A slider 101ap disposed on an outer wall of the holding unit 101a for accommodating the adhesive application unit U is inserted into the guiding shaft X1 so as to slide along the guiding shaft X1 (refer to FIG. 7).

The other end of the tensile springs S11 and S12 whose one end is fixed to the frame F is connected to arms 101am1 and 101am2 which are disposed on the outer wall of the holding unit 101a. A tensile force of the tensile springs S11 and S12 urges the holding unit 101a downward along the guiding shaft X1.

The receiving unit 101g whose bottom surface 101gb is flat is disposed in the holding unit 101a, and the receiving unit 101g is also integrally lifted and lowered in response to a lifting and lowering operation of the holding unit 101a.

Agear 101f is fixed to one end of the first rotary shaft 101J1 which extends to be parallel to the rotary shaft 1030 of the rotary paddle 103. A rotary drive force from the motor M is transmitted to the gear 101f via a gear 101d. According to this configuration, a CPU 701 drives and controls the motor M, thereby rotatably drives the first rotary shaft 101J1 in any desired rotation direction (clockwise or counterclockwise).

The first cam 101ca is fixed to the first rotary shaft 101J1. The bottom surface 101gb of the receiving unit 101g is driven in a direction of the guiding shaft X1 by coming into contact with a cam surface 101caf of the first cam 101ca rotating integrally with the first rotary shaft 101J1.

In this way, the first support mechanism causes the motor M to rotatably drive the first rotary shaft 101 J1, thereby supporting the adhesive application unit U so as to be slidingly movable along the guiding shaft X1 between an "adhesive application position" for pressing the sheet stacked on the processing tray 102 and applying the adhesive to the sheet surface and a "first retreat position" retreating to a position which does not interfere with a sheet stacking operation on the processing tray 102. That is, the first support mechanism has a role as a support mechanism for supporting the adhesive application unit U so as to be slidable between the "adhesive application position" and the "first retreat position".

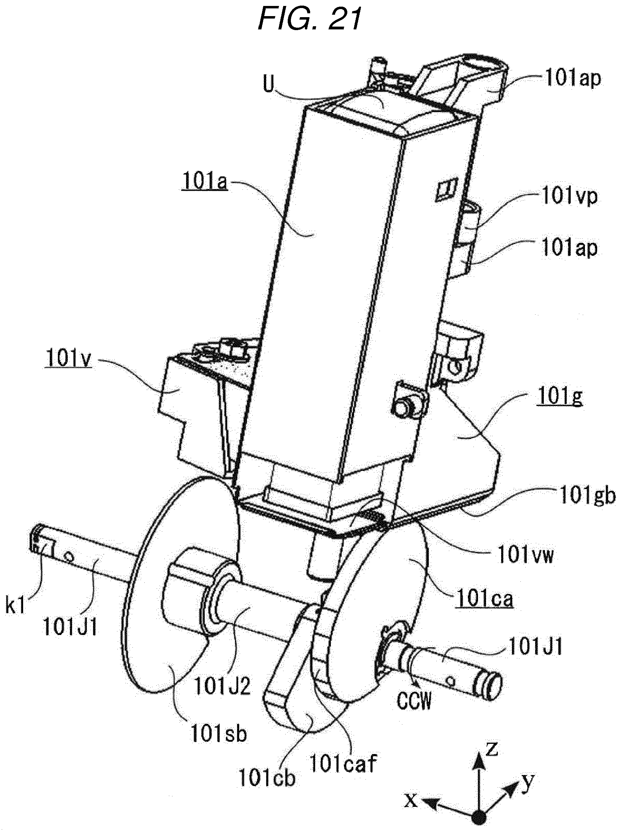

The shutter member 101vw is interposed between the adhesive application unit U and the sheet stacked on the processing tray 102, thereby interfering with adhesive applying performed by the adhesive application unit U to the sheet (for example, refer to FIG. 21 (to be described later)).

The second support mechanism will be described with reference to FIGS. 6 and 7. For example, the second support mechanism includes the frame F, the guiding shaft X1, a holding arm 101v, a tensile spring S2, the first rotary shaft 101J1, a second rotary shaft 101J2, a second cam 101cb, a guided shaft X2, and the motor M.

In the holding arm 101v, the shutter member 101vw is held in one end, and a slider 101 vp having a through-hole formed therein is disposed in the other end. The guiding shaft X1 whose both ends are supported by the frame F is inserted into the through-hole of the slider 101vp. The holding arm 101v is rotatable around the guiding shaft X1 as a support shaft. The other end of the tensile spring S2 whose one end is fixed to a main body of the post-processing apparatus 1 is connected to the vicinity of the other end of the holding arm 101v. In this manner, the shutter member 101vw is urged in a direction away from the holding unit 101a due to the tensile force of the tensile spring S2.

A holding unit 101vh having a through-hole formed therein for holding the guided shaft X2 is disposed in the vicinity of the other end of the holding arm 101v. The guided shaft X2 is held in a state of being inserted into the through-hole of the holding unit 101 vh. Here, as an example, the guided shaft X2 held by the holding unit 101vh is parallel to the guiding shaft X1.

The first rotary shaft 101J1 is inserted into a cylindrical one-way clutch (not illustrated) of the second rotary shaft 101J2 including the one-way clutch on an inner peripheral side. In this manner, the second rotary shaft 101 J2 is rotated via a one-way clutch (not illustrated) by a rotation drive force being transmitted from the first rotary shaft 101J1 when the first rotary shaft 101J1 is rotated in a first rotation direction (direction of an arrow CCW (counterclockwise) illustrated in FIG. 7), and the rotation drive force is not transmitted from the first rotary shaft 101J1 when the first rotary shaft 101J1 is rotated in a second rotation direction (direction of an arrow CW (clockwise) illustrated in FIG. 7) opposite to the first rotation direction CCW.

The second cam 101cb is fixed to the second rotary shaft 101 J2. The second cam 101 cb is also integrally rotated in response to the rotary operation of the second rotary shaft 101 J2. A second cam surface 101 cbf is formed in the second cam 101cb. The second cam surface 101 cbf guides the guided shaft X2 only when the second cam 101cb is rotated in the direction of the arrow CCW illustrated in FIG. 7. When the second cam 101 cb is rotated in the direction of the arrow CCW illustrated in FIG. 7, the guided shaft X2 is driven along the second cam surface 101 cbf, and rotates the holding arm 101v against the tensile force of the tensile spring S2 in a direction closer to the holding unit 101a. The operation of the second cam 101cb causes the shutter member 101vw to move downward (toward the shielding position) from the adhesive application unit U.

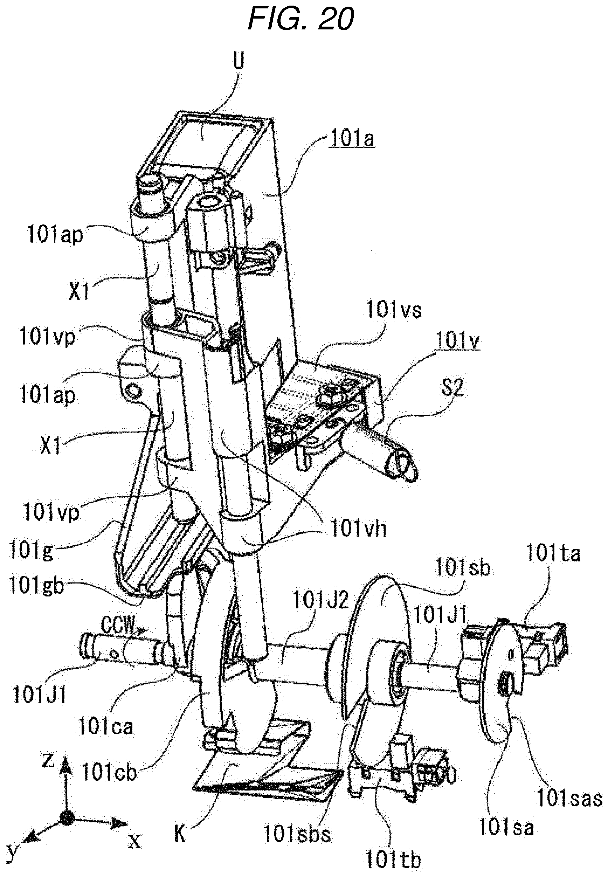

In this way, the second support mechanism supports the shutter member 101 vw so as to be rotatable around the guiding shaft as a fulcrum between a "shielding position (position illustrated in FIG. 20 (to be described later))" for supporting the shutter member 101 vw so as to be movable toward the surface of the sheet along the guiding shaft by being interposed between the adhesive application unit U and the sheet stacked on the processing tray 102 and by following a pressing operation of the adhesive application unit U moving toward the adhesive application position and a "second retreat position" (position illustrated in FIG. 7) retreating from a movement locus of the adhesive application unit U. That is, the second support mechanism has a role as a support mechanism for supporting the adhesive application unit U so as to be movable between the "shielding position" and the "second retreat position". Here, the "movement locus" means a space through which the adhesive application unit U passes along the guiding shaft X1 between the "adhesive application position" and the "first retreat position". That is, the shutter member 101vw located at the "second retreat position" retreats from the space through which the adhesive application unit U passes, and thus does not interfere with the movement of the adhesive application unit U.

When moving the shutter member 101vw to the "shielding position", the holding arm 101v in the second support mechanism supports the shutter member 101 vw at a high position where the shutter member 101 vw does not come into contact with the uppermost sheet among sheets stacked on the processing tray 102, even if the maximum number of stackable sheets is stacked on the processing tray 102.

In this way, when the shutter member 101 vw is moved to the shielding position, the shutter member 101 vw is supported at a high position where the shutter member 101vw does not come into contact with the sheet on the processing tray 102 regardless of the number of sheets stacked on the processing tray 102. Accordingly, when the shutter member 101vw moved to the shielding position is pressed down by the lowering adhesive application unit U, the upper surface of the uppermost sheet may be always stably pressed down by the shutter member 101 vw.

The adhesive application unit U is configured to be elastically urged from the retreat position toward the adhesive application position. Accordingly, as the number of sheets configuring a binding target sheet bundle on the processing tray 102 increases, a sheet pressing force of the adhesive application unit U increases when the adhesive application unit U is located at the adhesive application position. In general, when the sheets are bound by using the adhesive, it is desirable to crimp the sheets by using a stronger force as the number of sheets configuring the binding target sheet bundle increases. According to this configuration, it is possible to achieve more firm binding.

### Control Block

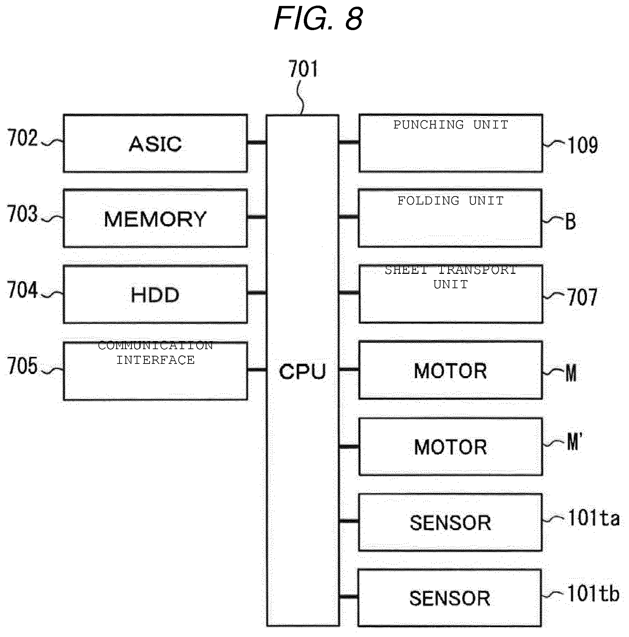

FIG. 8 is a view illustrating an example of a control block of the post-processing apparatus 1 including the sheet binding device according to the embodiment.

As illustrated in FIG. 8, for example, the post-processing apparatus 1 partially includes a CPU 701, an application specific integrated circuit (ASIC) 702, a memory 703, a hard disk drive (HDD) 704, a communication interface 705, the punching unit 109, the folding unit B, a sheet transport unit 707, the motor M, a motor M', a sensor 101 ta (first phase sensor), and a sensor 101 tb (second phase sensor).

Various actuators or sensors included in the post-processing apparatus 1, such as the ASIC 702, the memory 703, the hard disk drive (HDD) 704, the communication interface 705, the punching unit 109, the folding unit B, the sheet transport unit 707, the motor M, the motor M', the sensor 101 ta, and the sensor 101 tb are connected to the CPU 701 so as to be communicable via a communication line such as a parallel bus and a serial bus.

For example, the CPU 701 executes programs downloaded from the HDD 704 or an external device by loading the program into the memory 703. In this manner, the CPU 701 controls the punching unit 109, the folding unit B, the sheet transport unit 707, the motor M, the motor M', and the communication interface 705, for example. Here, the motor M' is an actuator for rotatably driving the rotary paddle 103.

In the sheet binding device and the post-processing apparatus 1 including the device according to the embodiment, the CPU 701 has a role of performing various processes in the sheet binding device and the post-processing apparatus 1 including the device. In addition, the CPU 701 also has a role of achieving various functions by executing programs stored in the memory 703 and the HDD 704. As a matter of course, the CPU 701 may also be replaced with a micro processing unit (MPU) which may execute equivalent arithmetic processing. In addition, similarly, the HDD 704 may also be replaced with a storage device such as a flash memory, for example.

For example, the memory 703 may include a random access memory (RAM), a read only memory (ROM), a dynamic random access memory (DRAM), a static random access memory (SRAM), a video RAM (VRAM), and a flash memory. The memory 703 has a role of storing various information items or programs used in the sheet binding device and the post-processing apparatus 1 including the device.

### Operation Description

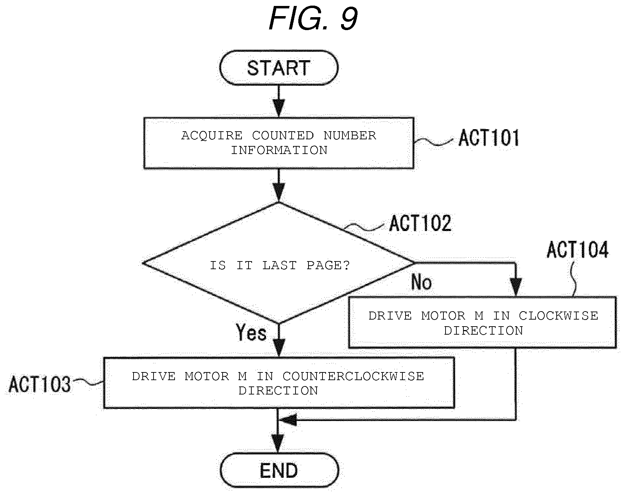

FIG. 9 is a flowchart for illustrating a process flow in the sheet binding device according to the embodiment.

First, from the image forming apparatus 7, the CPU 701 (counted number information acquisition unit) acquires information (counted number information) for determining whether or not a sheet which is now a binding target is a sheet corresponding to the last page within a sheet group configuring a sheet bundle of binding target sheets (ACT 101).

If the uppermost sheet stacked on the processing tray 102 is not the sheet corresponding to the last page in the binding target sheet bundle (ACT 102, No), the CPU 701 determines that adhesive application is needed, and rotates the motor M in the clockwise direction (direction CW illustrated in FIG. 7) (ACT 104).

If the uppermost sheet stacked on the processing tray 102 is the sheet corresponding to the last page in the binding target sheet bundle (ACT 102, Yes), the CPU 701 does not apply the adhesive, and rotates the motor M in the counterclockwise direction (direction CCW illustrated in FIG. 7) in order to crimp the sheet bundle stacked on the processing tray 102 (ACT 103).

First, description will be made with regard to a pasting operation (ACT 104) for sheets (the first sheet to the (n-1)^{th} sheet) except for a sheet of the last page in the binding target sheet bundle (the n^{th} sheet if the sheet bundle has n sheets).

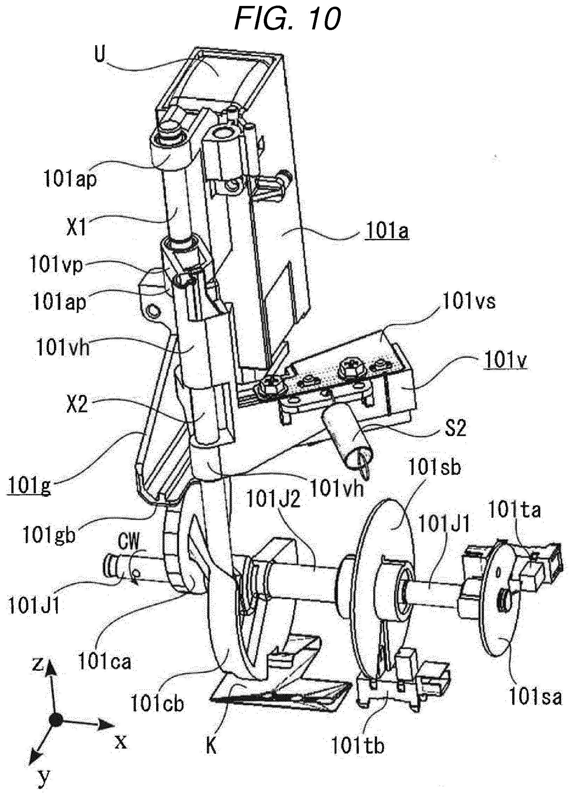

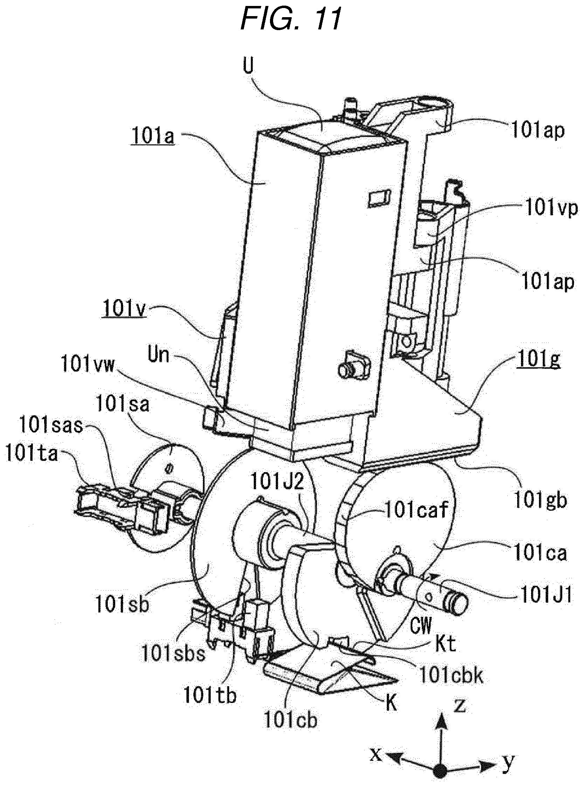

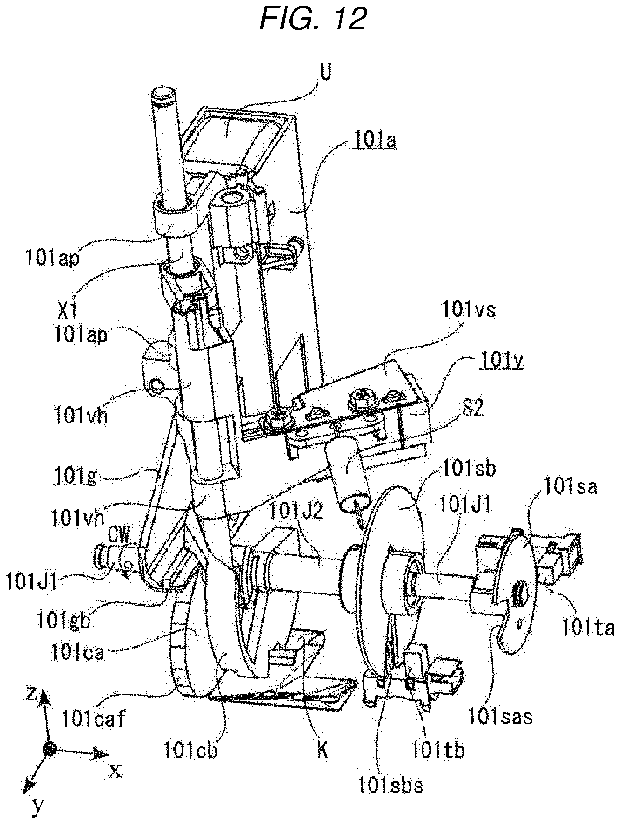

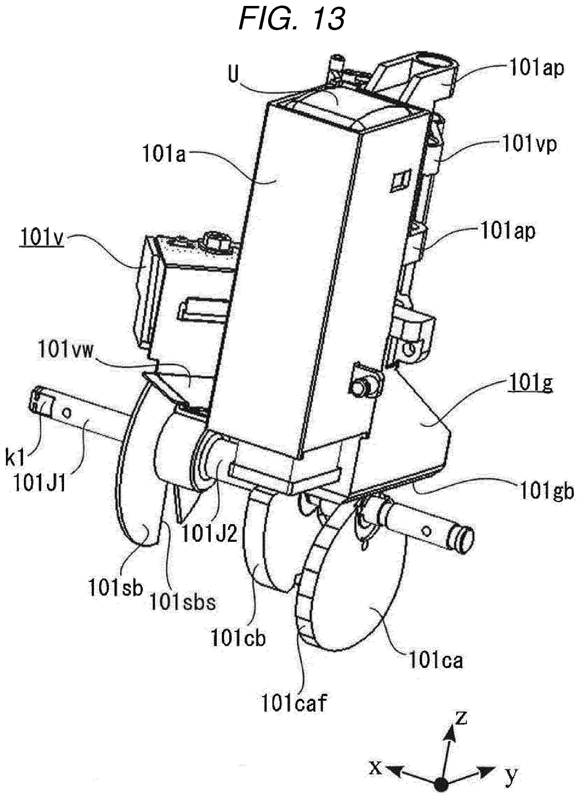

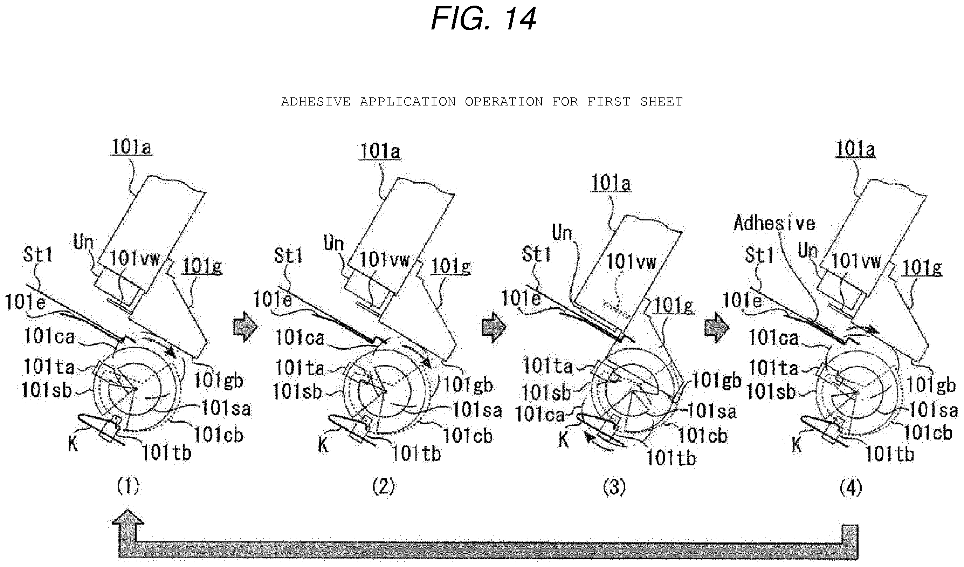

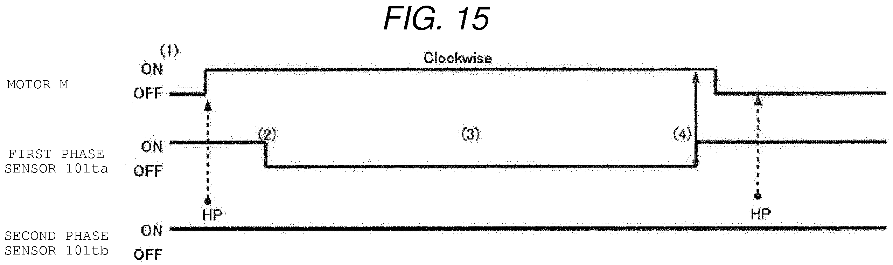

FIGS. 10 and 11 are exploded perspective views illustrating a state where the holding unit 101a is located at the "first retreat position". FIGS. 12 and 13 are exploded perspective views illustrating a state where the holding unit 101a is located at the "adhesive application position". FIG. 14 is a transition diagram illustrating a transition of an operation of each configuration component when the pasting operation is performed on a sheet St1 of the first page. FIG. 15 is a timing chart illustrating drive control performed by the CPU 701 in a case of sheets except for the last page.

As illustrated in FIGS. 10 to 15, the holding unit 101a in a state of being pressed upward by the first cam surface 101caf of the first cam 101ca follows the cam surface 101caf lowered in response to clockwise rotation of the first cam 101ca, and is lowered to the "adhesive application position" illustrated in FIGS. 12 and 13. At the "adhesive application position" illustrated in FIGS. 12 and 13, the adhesive application unit U applies an adhesive to an upper surface of a sheet located uppermost among sheets stacked on the processing tray 102 (refer to (4) in FIGS. 14 and 15). When the first rotary shaft 101J1 (first cam 101ca) is rotated in the clockwise direction, a cutout portion formed in the second cam 101cb is locked by a stopper K fixed to an apparatus main body in order to prevent the second rotary shaft 101 J2 and the second cam 101 cb from being rotated together due to frictional influence. The stopper K has a spring structure which restricts only a clockwise rotary operation of the second cam 101cb and allows counterclockwise rotation thereof.

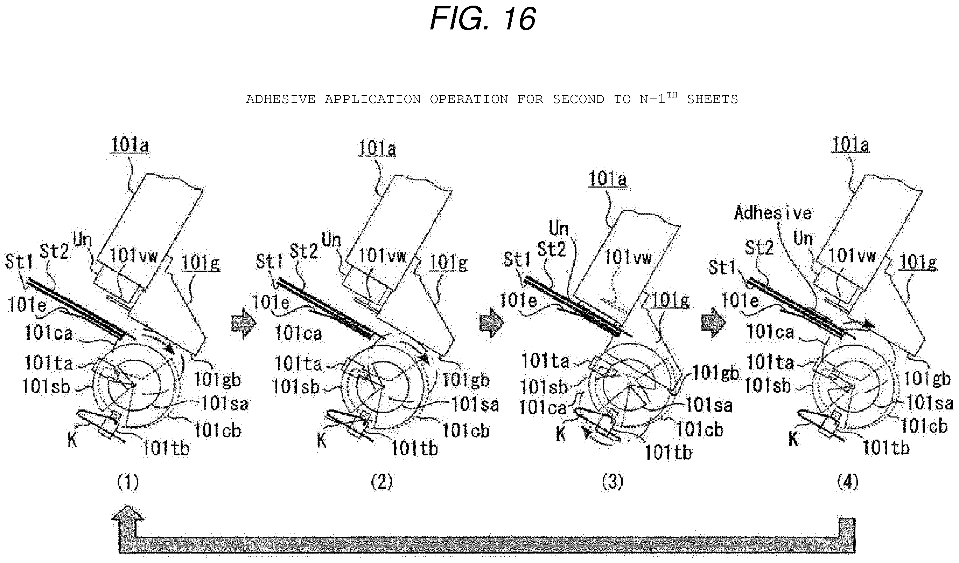

FIG. 16 is a transition diagram illustrating a transition of an operation of each configuration component when a pasting operation is performed on the second to the (n-1)^{th} sheets. Here, as an example, the pasting operation for the second sheet St2 will be described. However, a similar operation is also repeated for the third to the (n-1)^{th} sheets. That is, the sheet binding device according to the embodiment performs binding on each sheet.

Subsequently, description will be made with regard to a pressing (crimping) operation (ACT 103) for a sheet Stn of the last page in the binding target sheet bundle (the n^{th} sheet if the sheet bundle has n sheets).

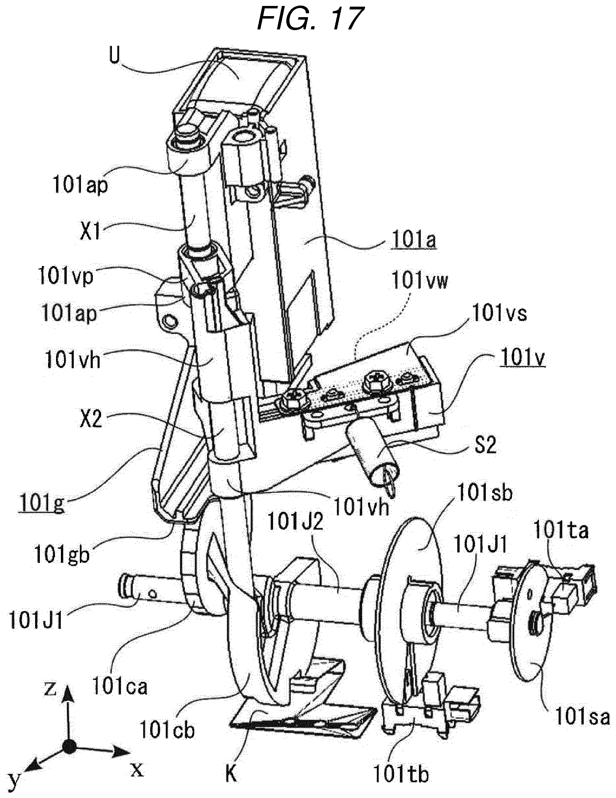

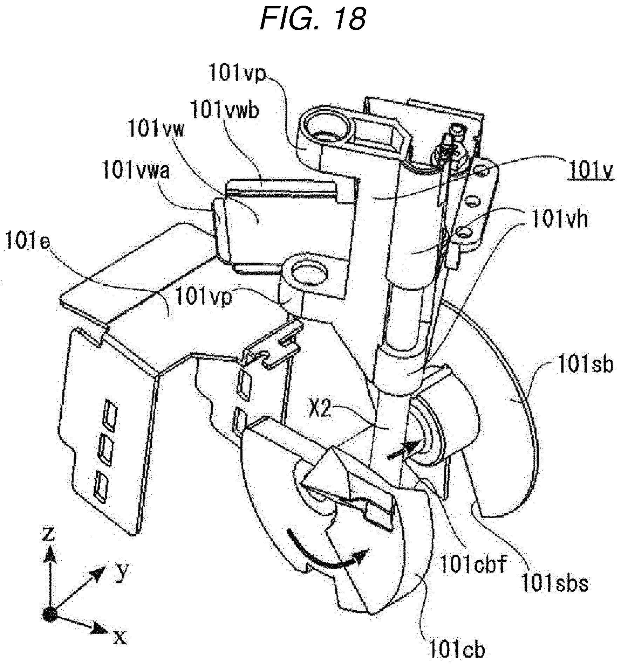

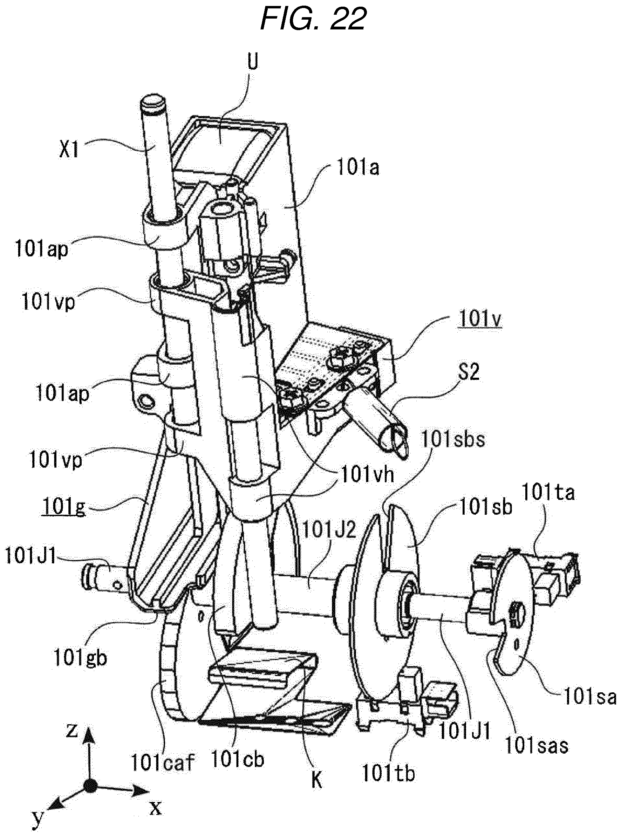

FIG. 17 is an exploded perspective view illustrating a state where the holding unit 101a is located at the "first retreat position" and the shutter member 101vw is located at the "second retreat position". In FIG. 17, since the shutter member 101vw is hidden by the holding arm 101v and thus is not visible (refer to FIG. 13), a position of the shutter member 101vw is illustrated by a dashed leader line. FIGS. 18 to 19 are exploded perspective views illustrating details of a rotary operation of the holding arm 101v which is performed by an operation of the second cam 101 cb. FIGS. 20 and 21 are exploded perspective views illustrating a state where the shutter member 101 vw is located at the "shielding position". FIG. 22 is an exploded perspective view illustrating a state where the holding unit 101a is lowered to the "adhesive application position" while the shutter member 101 vw is located at the "second retreat position".

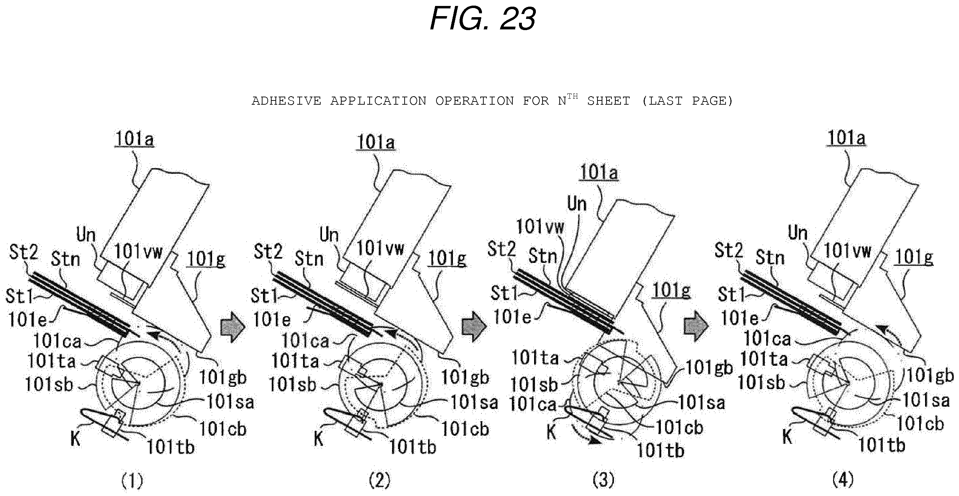

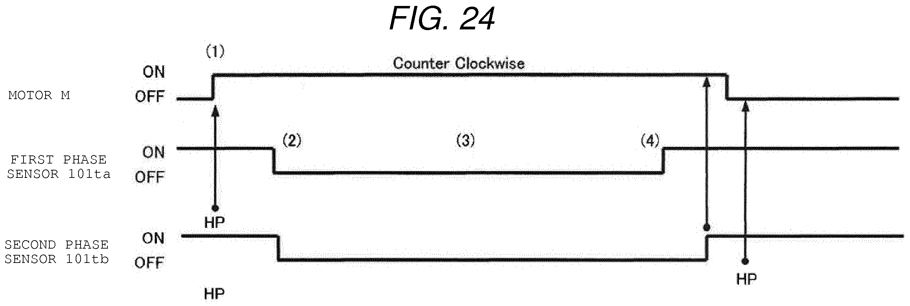

FIG. 23 is a transition diagram illustrating a transition of an operation of each configuration component when only pressing is performed on the sheet Stn of the last page. FIG. 24 is a timing chart illustrating drive control performed by the CPU 701 in a case of the sheet Stn of the last page.

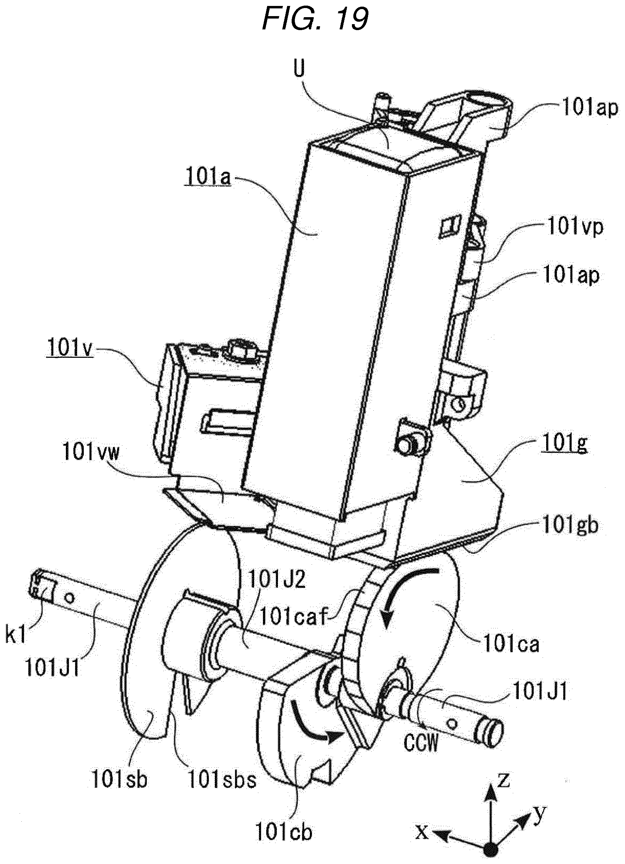

As illustrated in FIGS. 17 to 19, if the first rotary shaft 101J1 is rotatably driven in the counterclockwise direction (CCW) by the motor M, a rotation force applied to the first rotary shaft 101J1 is transmitted to the second rotary shaft 101 J2 via a one-way clutch. The second cam surface 101 cbf of the second cam 101cb rotating integrally with the second rotary shaft 101 J2 rotatably driven in the counterclockwise direction (CCW) in this way causes a tilted cam surface thereof to guide the guided shaft X2 so as to move in an arrow direction illustrated in FIGS. 18 and 21. In this way, when the second cam 101 cb is rotated in the arrow direction CCW, the guided shaft X2 is driven along the second cam surface 101 cbf, rotates the holding arm 101v against the tensile force of the tensile spring S2, and moves the shutter member 101vw toward the "shielding position" (refer to FIG. 19).

Since the first cam 101 ca is fixed to the first rotary shaft 101J1, the first cam 101ca is also rotated in the counterclockwise direction in response to the rotary drive in the counterclockwise direction (CCW) of the first rotary shaft 101J1 which is performed by the motor M. Therefore, the counterclockwise rotation of the first rotary shaft 101J1 causes the shutter member 101vw to move from the "second retreat position" toward the "shielding position" as described above. The operation of the first cam surface 101caf causes the holding unit 101a to be lowered from the "first retreat position" toward the "adhesive application position".

When the counterclockwise rotation of the first rotary shaft 101J1 causes the first cam 101ca and the second cam 101cb to be located at an angle position illustrated in FIG. 20, the shutter member 101 vw reaches the "shielding position" below the adhesive application unit U (refer to FIGS. 20, 21, and 23(2)).

If the shutter member 101vw reaches the "shielding position" and the first rotary shaft 101J1 is further rotated in the counterclockwise direction, as illustrated in FIG. 22, the holding unit 101a is further lowered toward the "adhesive application position" due to the operation of the first cam surface 101caf while the shutter member 101vw is located at the "shielding position" without any change. The holding unit 101a reaches the "adhesive application position" while pressing down the shutter member 101vw located at the "shielding position". Then, the holding unit 101a presses down the upper surface of the sheet (for example, the sheet Stn illustrated in FIG. 23(3)) located uppermost in the sheet bundle stacked on the processing tray 102.

If the first rotary shaft 101J1 is further rotated in the counterclockwise direction, the counterclockwise rotation of the second cam 101cb causes the second cam surface 101 cbf to release restriction on the guided shaft X2. The tensile force of the tensile spring S2 causes the holding arm 101v to restore a state illustrated in FIG. 17. In addition, the operation of the first cam surface 101caf of the first cam 101 ca rotating with the second cam 101cb in the counterclockwise direction causes the holding unit 101a to be pressed up toward the "first retreat position" against the tensile force of the tensile springs S11 and S12 (refer to FIG. 23(4)).

In this way, according to the embodiment, the CPU 701 (control unit) may execute a "pasting mode" in which the first support mechanism moves the adhesive application unit U between the "adhesive application position" and the "first retreat position", and a "pressing mode" in which the first support mechanism moves the adhesive application unit U from the "first retreat position" to the "adhesive application position" in a state where the second support mechanism moves the shutter member 101vw to the "shielding position", and in which the shutter member 101vw pressed down in response to the movement of the adhesive application unit U presses the sheet (for example, the sheet Stn illustrated in FIG. 23) stacked on the processing tray 102.

In this way, a configuration is adopted in which the adhesive applied sheet bundle is pressed via the shutter member 101vw by using the pressing force of the adhesive application unit U for applying the adhesive to the sheet. Accordingly, a single pressing mechanism may achieve both the adhesive application and the simple pressing operation.

Furthermore, in a "pasting drive mode", the CPU 701 (control unit) causes the motor M to rotatably drive the first rotary shaft 101J1 in the second rotation direction (for example, the clockwise direction CW), and drives the first support mechanism by using the rotation drive force transmitted from the first rotary shaft 101J1. In the "pressing mode" the CPU 701 causes the motor M to rotatably drive the first rotary shaft 101J1 in the first rotation direction (for example, the counterclockwise direction CCW), drives the first support mechanism by using the rotation drive force transmitted from the first rotary shaft 101J1, and drives the second support mechanism by using the rotation drive force transmitted from the second rotary shaft 101 J2.

In this way, a configuration is adopted in which the movement of the adhesive application unit U between the "adhesive application position" and the "retreat position" is driven by using the rotation drive force transmitted from the first rotary shaft 101J1 to which the rotation drive force is always transmitted from the motor M regardless of the rotation direction of the motor M. Accordingly, even in any mode between the "pasting drive mode" and the "pressing drive mode", the operation of the adhesive application unit U may be used in common.

According to the embodiment, the CPU 701 (control unit) executes the "pasting mode" in which the first support mechanism moves the adhesive application unit U between the "adhesive application position" and the "first retreat position", and the "pressing mode" in which the first support mechanism moves the adhesive application unit U toward the "adhesive application position" in a state where the second support mechanism moves the shutter member 101vw to the "shielding position", and in which the shutter member 101vw pressed down in response to the movement of the adhesive application unit U presses the sheet stacked on the processing tray 102.

In this way, the guiding shaft X1 for guiding the adhesive application unit U in the first support mechanism so as to be slidingly movable between the "adhesive application position" and the "first retreat position" is used in common as a rotation support shaft for supporting the shutter member 101vw in the second support mechanism so as to be rotatable between the "shielding position" and the "second retreat position". Accordingly, a simple configuration may restrict the operation of the adhesive application unit U and the shutter member 101vw. In addition, the same shaft may also be employed as a guide for the movement of the shutter member 101 vw in response to the movement of the adhesive application unit U to the "adhesive application position". Therefore, both the adhesive application unit U and the shutter member 101 vw may be reliably and integrally slid on the same locus.

Subsequently, description will be made on a relationship among the adhesive application unit U, the holding unit 101a, and the shutter member 101vw when the shutter member 101 vw presses down the upper surface of the sheet on the processing tray 102.

As illustrated in FIG. 18, the shutter member 101vw includes receiving units 101vwa and 101vwb which come into contact with any one of the adhesive application unit U and the first support mechanism, and which receive a pressing force (tensile force of the tensile springs S11 and S12) acting toward the "adhesive application position" of the adhesive application unit U, when the adhesive application unit U is moved to the "adhesive application position" in a state where the shutter member 101vw is located at the "shielding position".

When the receiving units 101 vwa and 101 vwb are in contact with any one of the adhesive application unit U and the first support mechanism, the shutter member 101 vw is formed in a shape where the adhesive supplied from the adhesive application unit U does not come into contact with the shutter member 101vw. Specifically, when the receiving units 101vwa and 101vwb are in contact with any one of the adhesive application unit U and the first support mechanism, a predetermined gap is secured between an adhesive supply portion Unp of the adhesive application unit U and the shutter member 101 vw. Accordingly, the adhesive supplied from the adhesive supply portion Unp does not adhere to the shutter member 101 vw.

In this way, a configuration is adopted in which the shutter member 101 vw and the adhesive supplied from the adhesive application unit U do not come into contact with each other when the shutter member 101vw presses the sheet bundle by receiving the pressing force of the adhesive application unit U. Accordingly, it is possible to prevent the shutter member 101vw from becoming dirty due to the adhesive. Therefore, there is no possibility that the adhesive which is originally intended to adhere to the sheet may wastefully adhere to the shutter member 101 vw.

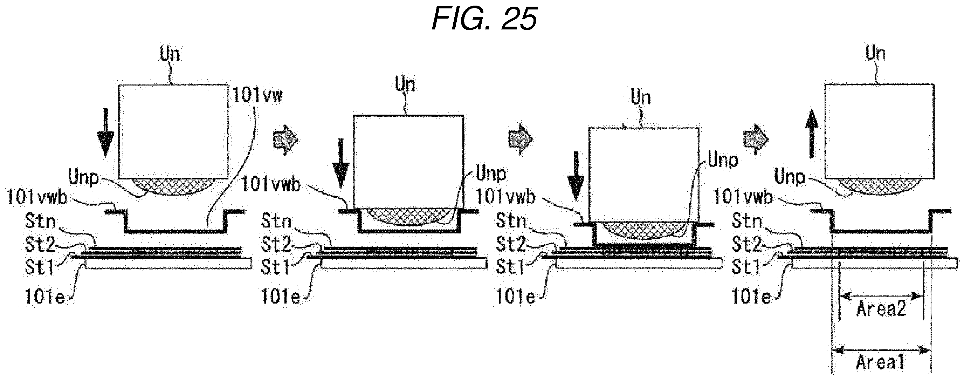

As illustrated in FIGS. 18 and 25, according to the embodiment, a surface on the shutter member 101vw side which is pressed against the upper surface of the sheet stacked on the processing tray 102 is formed in a convex shape toward the processing tray 102 side.

In this way, the sheet pressing side surface of the shutter member 101 vw has the convex shape. Accordingly, it is possible to increase pressure applied from the shutter member 101 vw to the vicinity of the sheet pasting position, as compared to a case where the sheet is pressed by using a flat surface. Therefore, it is possible to more strongly and stably bond binding target sheets.

It is desirable that an area Area1 which comes into contact with the sheet when the shutter member 101vw presses the upper surface of the sheet stacked on the processing tray 102 includes at least an area Area2 for applying the adhesive onto the sheet in a plane direction orthogonal to the movement direction of the adhesive application unit U.

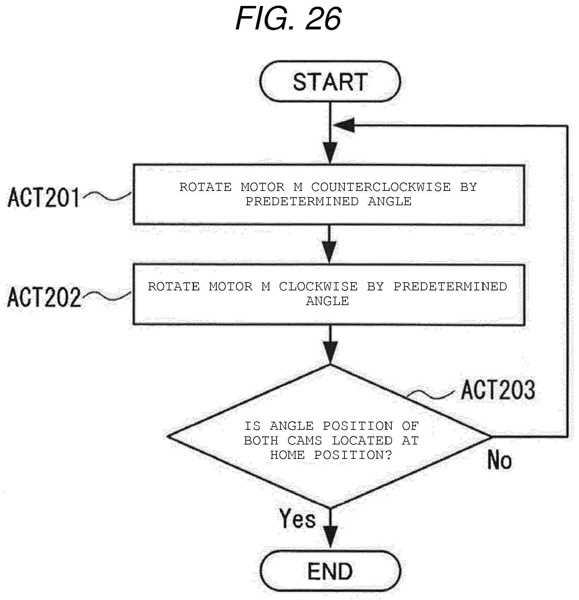

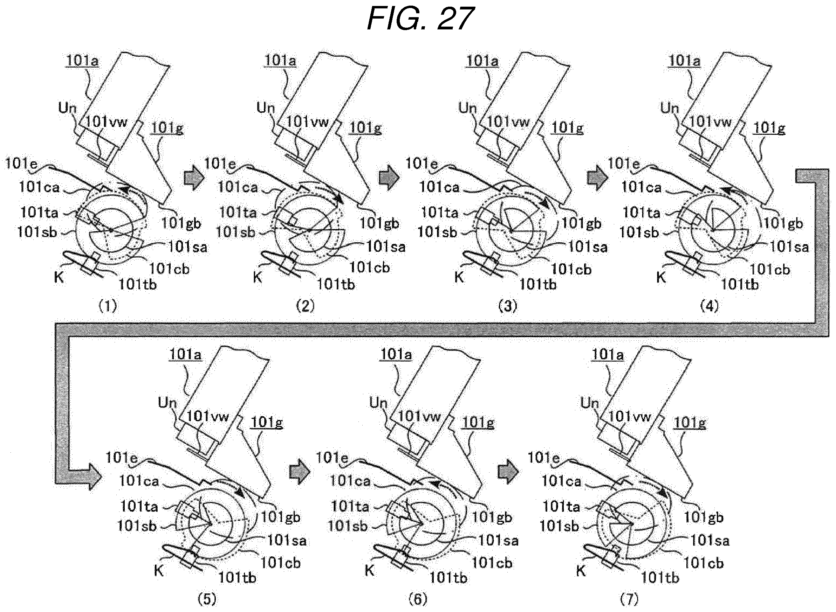

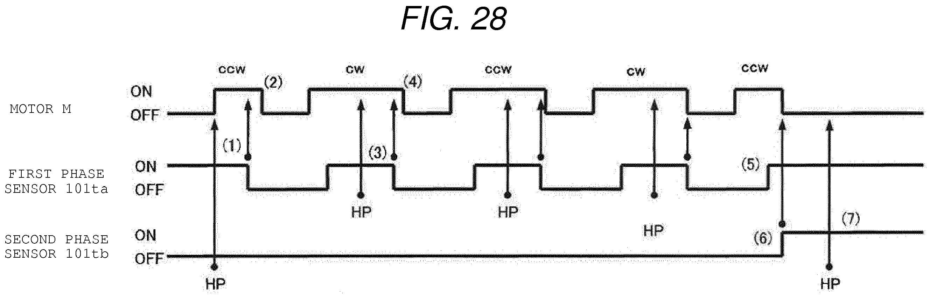

Subsequently, description will be made with regard to a method of correcting deviation of a rotation angle position between the first cam 101 ca and the second cam 101cb. FIG. 26 is a flowchart illustrating a method of correcting deviation of the rotation angle position between the first cam 101ca and the second cam 101cb. FIG. 27 is a transition diagram illustrating an operation of each member when the operation of the flowchart in FIG. 26 is performed. FIG. 28 is a timing chart illustrating content of controlling performed by the CPU 701 when the operation of the flowchart in FIG. 26 is performed.

According to the embodiment, in order to transmit power via a one-way clutch between the first rotary shaft 101J1 to which the first cam 101ca is fixed and the second rotary shaft 101 J2 to which the second cam 101cb is fixed, the rotation angle position between the first cam 101ca and the second cam 101cb is deviated from a normal relationship while the "pasting drive mode" for rotating the first rotary shaft 101J1 in the clockwise direction and the "pressing drive mode" for rotating the first rotary shaft 101J1 in the counterclockwise direction are alternately executed. This deviation from the normal relationship at the rotation angle position between the first cam 101ca and the second cam 101cb leads to timing deviation of a shielding operation performed by the shutter member 101 vw when the adhesive application unit U is lowered to the "adhesive application position".

Therefore, according to the embodiment, there are provided a first phase detection member 101sa, a first phase sensor 101ta, a second phase detection member 101 sb, and a second phase sensor 101 tb.

As a flag for detecting the rotation angle position of the first rotary shaft 101J1, the first phase detection member 101sa is disposed in an end portion k1 of the first rotary shaft 101J1 so as to be rotatable integrally with the first rotary shaft 101J1 (for example, refer to FIG. 7). Specifically, the first phase detection member 101sa is a disc having a cutout portion 101sas formed therein, and allows detection light of an optical sensor to pass at only a position corresponding to the cutout portion 101 sas.

The first phase sensor 101 ta is a light-transmitting-type optical sensor, for example, and is disposed so as to be capable of detecting a state where the first phase detection member 101 sa is located at a normal angle position. When the first phase detection member 101sa is located at the normal angle position, the cutout portion 101sas is in a state of allowing the detection light of the first phase sensor 101 ta to pass therethrough.

As a flag for detecting the rotation angle position of the second rotary shaft 101 J2, the second phase detection member 101 sb is disposed in an end portion of the second rotary shaft 101 J2 so as to be rotatable integrally with the second rotary shaft 101J2 (for example, refer to FIG. 7). Specifically, the second phase detection member 101 sb is a disc having a cutout portion 101 sbs formed therein, and allows the detection light of the optical sensor to pass at only a position corresponding to the cutout portion 101 sbs.

The second phase sensor 101tb is a light-transmitting-type optical sensor, for example, and is disposed so as to be capable of detecting a state where the second phase detection member 101 sb is located at a normal angle position. When the second phase detection member 101 sb is located at the normal angle position, the cutout portion 101sbs allows the detection light of the second phase sensor 101 tb to pass.

In this configuration, when the motor M rotates the first rotary shaft 101J1 in the first rotation direction and in the second rotation direction alternately and respectively by a predetermined angle (ACT 201 and ACT 202), the CPU 701 (phase adjustment unit) adjusts a phase of the rotation angle position between the first rotary shaft 101J1 and the second rotary shaft 101J2 to a normal state, based on a detection result of the first phase sensor 101 ta and the second phase sensor 101 tb (ACT 203).

In this way, according to the embodiment, the one-way clutch is employed in order to transmit the drive force between the first rotary shaft 101J1 and the second rotary shaft 101 J2. Accordingly, the first rotary shaft 101 J1 is rotated in the first rotation direction and in the second rotation direction alternately and respectively by a predetermined angle (for example, a top dead center range of the first cam 101 ca). In this manner, it is possible to change the phase of the angle position between the first rotary shaft 101J1 and the second rotary shaft 101 J2.

Therefore, if a configuration is adopted in which the first phase detection member 101 sa and the second phase detection member 101 sb may detect whether or not the first rotary shaft 101J1 and the second rotary shaft 101J2 have a relationship at a correct relative angle position, the first rotary shaft 101J1 and the second rotary shaft 101J2 may reach a relative angle position having a normal relationship without fail by alternatively repeating forward and reverse rotation as illustrated by (1) to (7) in FIGS. 27 and 28 (ACT 203).

Each operation in the processing performed by the above-described sheet binding device is achieved by causing the CPU 701 to execute a sheet binding program stored in the memory 703.

### (Second Embodiment)

Subsequently, a second embodiment will be described.

The second embodiment is a modification example of the above-described first embodiment. The second embodiment has a configuration of a rotary paddle which hits and drops a sheet on the processing tray 102, and the configuration is different from that of the first embodiment. Hereinafter, in the embodiment, the same reference numerals are given to the elements having the same functions as those in the first embodiment, and description thereof will be omitted.

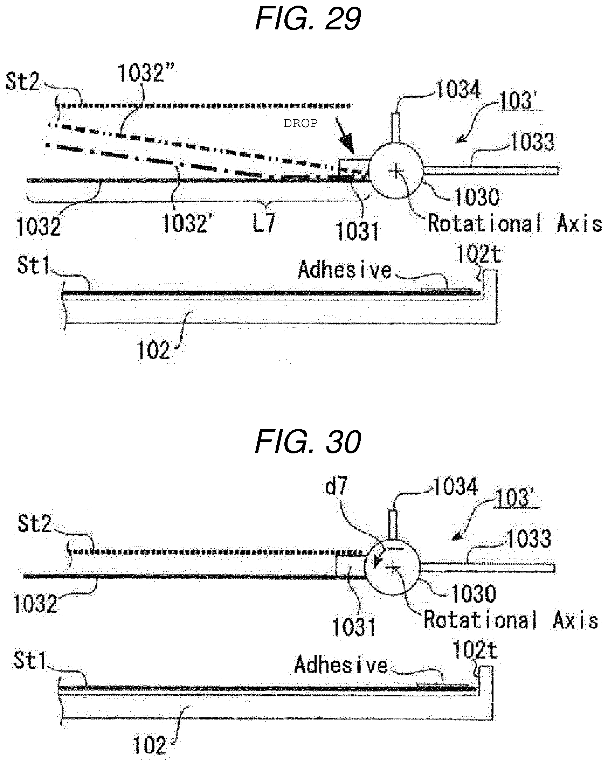

FIG. 29 is a view illustrating a schematic configuration of a rotary paddle 103' according to the second embodiment. The rotary paddle 103' according to the embodiment includes a rotary shaft 1030, a temporary support portion 1031 disposed on an outer peripheral surface of the rotary shaft 1030, a first rotary paddle 1034, a second rotary paddle 1033, and an abutting auxiliary member 1032.

The temporary support portion 1031, the first rotary paddle 1034, and the second rotary paddle 1033 are disposed on the outer peripheral surface of the rotary shaft 1030 at a predetermined interval in a circumferential direction, and are disposed upright so as to respectively protrude outward in a radial direction of the rotary shaft 1030 from the outer peripheral surface of the rotary shaft 1030. As illustrated in FIG, 29, the abutting auxiliary member 1032 is fixed to a side surface on a downstream side of the temporary support portion 1031 in the rotation direction of the rotary paddle 103.

The temporary support portion 1031 has a role of supporting a lower surface of a tip end of a processing target sheet temporarily stacked on a temporary tray from below (refer to FIG. 29). Specifically, the temporary support portion 1031 supports the lower surface of the tip end of the sheet temporarily stacked on the temporary tray from below at an angle position (home position) illustrated in FIG. 29.

The second rotary paddle 1033 is formed of an elastic member which rotates integrally with the rotary shaft 1030. As illustrated in FIGS. 29 to 33, the second rotary paddle 1033 rotates in a rotation direction d7, thereby rotating while coming into contact with the upper surface of the sheet dropped on the processing tray 102 from the temporary tray. The second rotary paddle 1033 transports the sheet through the above-described operation, and causes the tip end of the sheet to abut onto a predetermined abutting alignment position 102t in the processing tray 102.

The abutting auxiliary member 1032 is a film (for example, a polyester film) whose capability of releasing from an adhesive is superior to that of the binding target sheet.

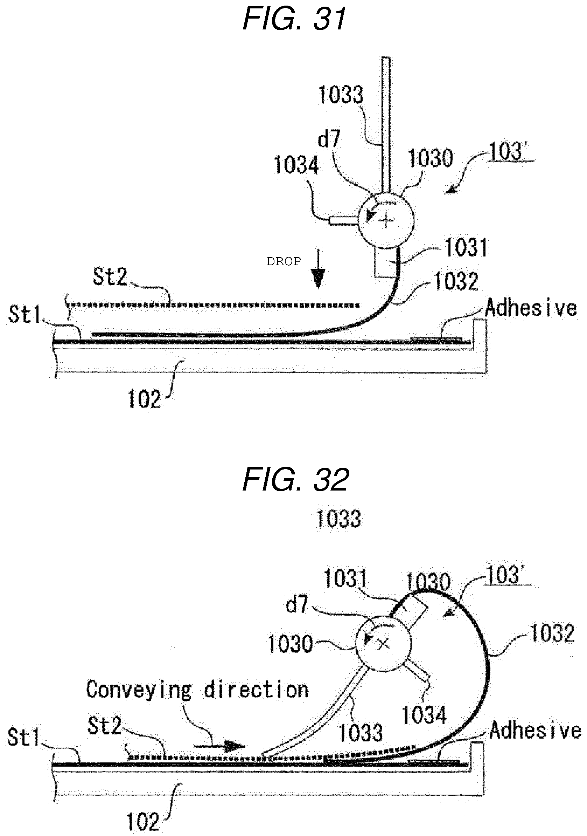

The abutting auxiliary member 1032 is disposed in the rotary shaft 1030 which is the same as the rotary shaft to which the first rotary paddle 1034 and the second rotary paddle 1033 are fixed. A length L7 (refer to FIG. 29) of the abutting auxiliary member 1032 is set to a length which satisfies a predetermined condition when the sheet is transported toward the abutting alignment position by the second rotary paddle 1033. Specifically, the length L7 of the abutting auxiliary member 1032 is set as the length which causes a tip end of a sheet St2 to be interposed between a tip end portion of the abutting auxiliary member 1032 and the second rotary paddle 1033, during a time until the tip end of the sheet (St2 in FIG. 32) at least rides on an adhesive area applied onto an immediately prior sheet (St1 in FIG. 32), when the sheet is transported toward the abutting alignment position by the second rotary paddle 1033 (refer to FIG. 32).

Subsequently, an operation of the rotary paddle 103' according to the second embodiment will be described with reference to FIGS. 29 to 34.

The sheet St2 to be stacked on the temporary tray drops onto the temporary tray, and the lower surface of the tip end is supported by the temporary support portion 1031 (refer to FIGS. 29 and 30). When the sheet St2 stacked on the temporary tray is dropped onto the sheet St1 stacked on the processing tray 102, the CPU 701 causes the motor M' to rotatably drive the rotary shaft 1030 in the rotation direction illustrated in FIG. 30, releases the sheet supported by the temporary support portion 1031, and allows the sheet to drop onto the processing tray 102 (refer to FIG. 31). Here, it is assumed that pasting is completely performed on a predetermined area on the upper surface of the sheet St1 by the adhesive application unit U (refer to FIG. 31). At this time, the tip end of the sheet St2 loaded onto the processing tray 102 is placed on the upper surface of the abutting auxiliary member 1032 in a state of being pressed against the upper surface of the sheet stacked on the processing tray 102 (refer to FIG. 31).

If the rotary shaft 1030 is further rotated in the rotation direction d7, the abutting auxiliary member 1032 slides on the sheet toward a pasting area on the sheet while being pressed against the upper surface of the sheet stacked on the processing tray 102 (refer to FIG. 31).

Subsequently, if in a state illustrated in FIG. 31, the rotary shaft 1030 is further rotated in the rotation direction d7, subsequently to the abutting auxiliary member 1032, the second rotary paddle 1033 comes into contact with the upper surface of the sheet St2 stacked on the processing tray 102 (refer to FIG. 32). That is, the second rotary paddle 1033 transports the sheet St2 in a state where the tip end of the sheet St2 is placed on the abutting auxiliary member 1032.

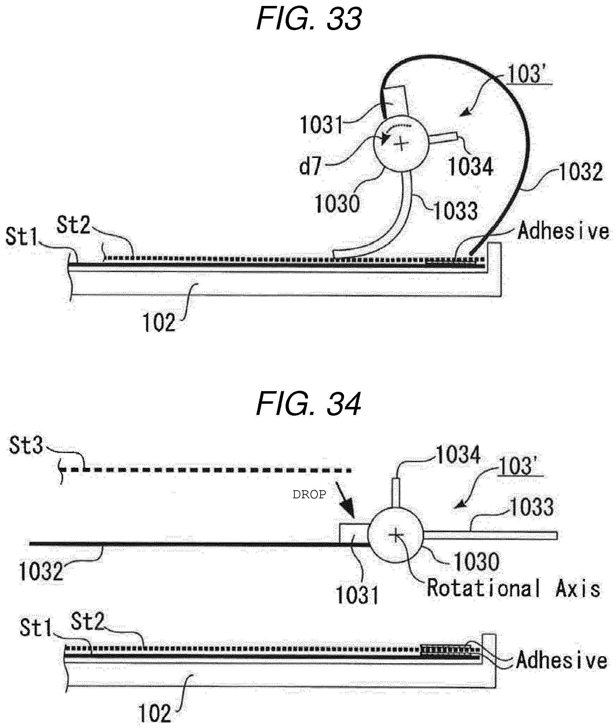

Then, if in the state illustrated in FIG. 31, the rotary shaft 1030 is further rotated in the rotation direction d7, the sheet St2 to be transported to the abutting position of the processing tray 102 by the second rotary paddle 1033 passes a pasting portion in a state where the tip end rides on the abutting auxiliary member 1032, and abuts onto the abutting position of the processing tray 102 (refer to FIG. 33). If the tip end of the sheet St2 rides on the pasting portion, the abutting auxiliary member 1032 retreats from a portion between the sheet St2 and the pasting portion, and is separated from the upper portion of the processing tray 102 (refer to FIG. 33).

In this way, if the pasting is performed on the upper surface of the sheet St2 abutting onto the predetermined abutting position of the processing tray 102 (refer to FIG. 34), the CPU 701 drops a sheet St3 to be subsequently stacked on the processing tray 102 onto the temporary tray and the temporary support portion 1031. The subsequent transport operation and pasting operation for the sheet St3 are the same as those for the above-described sheet St2.

In this way, there is provided the abutting auxiliary member 1032 which is interposed between the tip end of the sheet and the adhesive application area on the sheet stacked immediately before, until the tip end of the sheet transported by the second rotary paddle 1033 rides on the adhesive application area on the sheet stacked on the processing tray 102 immediately before. Accordingly, there is no possibility that the tip end of the sheet transported by the second rotary paddle 1033 may come into contact with and may be caught on the adhesive on the sheet stacked immediately before.

The abutting auxiliary member may be disposed in the rotary shaft 1030 so as to be intermediately bent toward the upstream side in the rotation direction of the rotary paddle 103' as compared to the radial direction of the rotary shaft 1030 (refer to an abutting auxiliary member 1032' illustrated by a dashed line in FIG. 29). As a matter of course, without being limited to a configuration of being intermediately bent, a range from the base end portion to the tip end portion may entirely or partially have a bent shape so as to draw a gentle arc.

According to this configuration, when the sheet is transported toward the abutting alignment position by the second rotary paddle 1033, the sheet is likely to be transported, and there is no possibility of hindering the sheet dropping from the temporary tray from being stacked on the processing tray 102.

Alternatively, the abutting auxiliary member may extend so as to tilt from the base end portion in the radial direction of the rotary shaft 1030 (refer to an abutting auxiliary member 1032 illustrated by a two-dot chain line in FIG. 29). That is, a configuration may be adopted in which without extending in the radial direction of the rotary shaft 1030 from the base end portion of the abutting auxiliary member located on the outer peripheral surface of the rotary shaft 1030, the abutting auxiliary member extends obliquely in a direction tilting toward the upstream side in the rotation direction of the rotary paddle 103' with respect to the radial direction of the rotary shaft 1030.

According to this configuration, when the sheet is transported toward the abutting alignment position by the second rotary paddle 1033, the sheet is likely to be transported, and there is no possibility of preventing the sheet dropping from the temporary tray from being stacked on the processing tray 102.

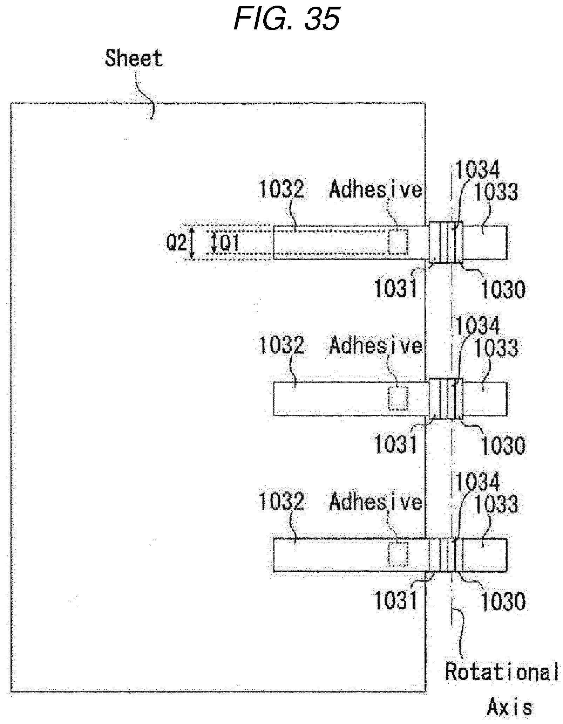

The abutting auxiliary member according to the embodiment is disposed at a position corresponding to an adhesive application area Q1 of the adhesive application unit U in a direction of a rotational axis (dashed line illustrated in FIG. 35) of the rotary shaft 1030, for example. Here, the abutting auxiliary member is set so that the width in the direction of the rotational axis is wider than the width of the adhesive application area Q1 on the sheet (refer to Q2 illustrated in FIG. 35). According to this configuration, when the subsequent sheet is transported from a standby tray to a processing tray, it is possible to prevent the subsequent sheet from coming into contact with the adhesive on the sheet previously stacked on the processing tray.

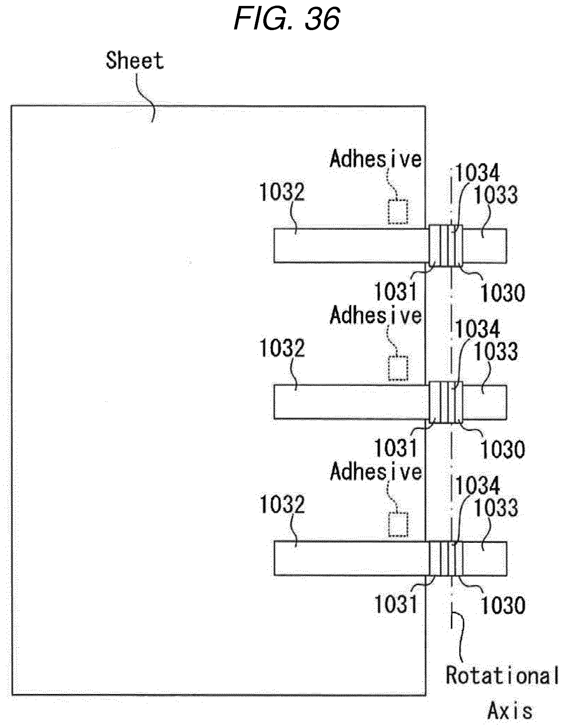

As a matter of course, the abutting auxiliary member is not necessarily to be disposed so as to overlap the adhesive application area. Consequentially, the abutting auxiliary member may be interposed between the tip end of the sheet and the pasting portion to an extent such that the tip end of the sheet does not come into contact with and is not caught on the pasting portion, when the sheet is transported toward the abutting position by the second rotary paddle 1033. Accordingly, for example, as illustrated in FIG. 36, the abutting auxiliary member may be disposed so that the position of the abutting auxiliary member and the position of the adhesive application area of the adhesive application unit U do not overlap each other in the direction of the rotational axis of the rotary shaft 1030.

In the above-described respective embodiment, without being necessarily limited to a case of applying liquefied paste, the adhesive application unit U for applying the paste to the sheet may employ the following some other examples.
(1) Pasting by using a double-sided tape having paste on both surfaces
(2) Application of paste-like glue
(3) Ejection of liquefied paste
(4) Application of stick-shaped paste

When a configuration is adopted in which the adhesive application unit ejects the liquefied paste, as an application unit, it is possible to use an ink jet-type printer head which discharges a pressure sensitive adhesive by driving a piezoelectric element or a thermal element.

In the above-described respective embodiments, a configuration in which the adhesive application unit applies a pressure sensitive-type adhesive onto the sheet is described as an example. However, the embodiments are not limited thereto. For example, the adhesive employed by the embodiment may be suitable for reuse where an adhesive force decreases or substantially dissipates by receiving high heat or low heat. In addition, the adhesive used by the adhesive unit may be configured so that the adhesive force decreases or substantially dissipates by receiving light.

In the above-described first and second embodiments, a configuration in which the guided shaft X2 integrally included in the holding arm 101v is moved by the second cam surface 101 cbf is described as an example. However, the embodiments are not limited thereto. For example, a projection portion formed of a resin projecting from the holding arm 101v itself may be moved by the second cam surface 101 cbf.

In the above-described respective embodiments, even if description is made so that paste serving as an adhesive is "applied", the meaning includes not only a case where the sheet is simply "coated with" the adhesive, but also a case where the adhesive is sprayed onto the sheet. For example, the meaning also includes a case where a tape-type adhesive is attached thereto or a case where a stamp-type adhesive is applied thereto. That is, as long as an adhesive adheres to a surface of a sheet as a processing result, any method may be employed.

Without being necessarily limited to paper, the "sheet" in the above-described respective embodiments may employ an OHP film sheet, for example. As long as a sheet-like medium may be bound by using the paste, any medium may be employed.

In the above-described respective embodiments, a configuration in which the binding unit T is disposed at the position illustrated in FIG. 1 inside the post-processing apparatus 1 is described as an example. However, the embodiments are not necessarily limited thereto. For example, the binding unit T may be disposed elsewhere inside the devices such as the punching unit 109 or the folding unit B.

Furthermore, a program for executing the above-described respective operations in a computer configuring the sheet binding device and the post-processing apparatus including the device may be provided as a sheet binding program. In the embodiments, a case in which the program for achieving functions of embodying the disclosure is previously recorded in a storage area disposed inside the device is described as an example. However, without being limited thereto, the same program may be downloaded to the device from the network, or the same program stored in a computer-readable recording medium may be installed in the device. As the recording medium, any form may be employed as long as the recording medium may store the program and may be read by the computer. Specifically, for example, the recording medium includes an internal storage device incorporated in the computer such as a ROM and a RAM, a portable storage medium such as a CD-ROM, a flexible disk, a DVD disk, a magneto-optical disk, and an IC card, database for holding computer programs, or other computers and database thereof, and a network transmission medium. The function which may be obtained by previously installing or downloading the program in this way may be achieved in cooperation with an operating system (OS) installed in the device.

The program may be partially or entirely an execution module which is dynamically generated.

As a matter of course, in various processes achieved by causing the CPU or the MPU to execute the program in the above-described respective embodiments, at least some processes may also be performed by ASIC701 in a circuit manner.

In this way, according to the above-described respective embodiments, any desired embodiments may be freely combined with each other as long as technical contradiction does not occur.

While certain embodiments have been described, these embodiments have been presented by way of example only, and are not intended to limit the scope of the claims. Indeed, the novel embodiments described herein may be embodied in a variety of other forms; furthermore, various omissions, substitutions and changes in the form of the embodiments described herein may be made without departing from the scope of the claims.

## Claims

1. A sheet binding device comprising:
a processing tray (102) on which a binding target sheet is stacked;
a rotary paddle (103', 1030, 1033) that causes the sheet to abut against a predetermined abutting alignment position on the processing tray by rotating while coming into contact with an upper surface of the sheet stacked on the processing tray;
an adhesive application unit that applies an adhesive to a predetermined area of the upper surface of the sheet abutted against the abutting alignment position; and
an abutting assistance member (1032) that is disposed in a same rotary shaft as the rotary paddle, the sheet binding device being **characterised in that** the abutting assistance member has such a length so as to interpose a tip end of the sheet between a tip end of the abutting assistance member and the rotary paddle during a time until the tip end of the sheet which is conveyed toward the abutting alignment position by the rotary paddle at least rides on an area of the adhesive applied onto the sheet stacked on the processing tray immediately in front of the sheet.

2. The device according to claim 1,
wherein the abutting assistance member is a film which is more easily separated from the adhesive than the sheet.

3. The device according to claim 1 or 2,
wherein the abutting assistance member is provided in the rotary shaft so as to be bent toward an upstream side in a rotation direction of the rotary paddle with respect to a radial direction of the rotary shaft.

4. The device according to claim 1 or 2,
wherein the abutting assistance member is provided in the rotary shaft so as to tilt toward an upstream side in a rotation direction of the rotary paddle with respect to a radial direction of the rotary shaft.

5. The device according to any one of claims 1 to 4,
wherein the abutting assistance member is provided at a position corresponding to an adhesive application area of the adhesive application unit in a direction of the rotary shaft.

6. The device according to any one of claims 1 to 5, further comprising:
a temporary tray (104) that is provided above the processing tray, that temporarily places the conveyed sheet thereon, and that drops the temporarily placed sheet onto the processing tray; and
a support member (1031) that is provided on the rotary shaft, and that supports a tip end of the sheet which is temporarily placed on the temporary tray,
wherein the abutting assistance member is provided on a side surface on an upstream side of the support member in the rotation direction of the rotary paddle.

7. The device according to any one of claims 1 to 6,
wherein the abutting assistance member is a polyester film.

## Patentansprüche

1. Blattbindungsvorrichtung, die umfasst:
eine Bearbeitungsablage (102), auf die ein Bindungszielblatt gestapelt ist;
eine Drehschaufel (103', 1030, 1033), die bewirkt, dass das Blatt an einer vorgegebenen Anlageausrichtungsposition auf der Bearbeitungsablage anliegt, indem sie sich dreht, während sie mit einer oberen Fläche des auf die Bearbeitungsablage gestapelten Blatts in Kontakt kommt;
eine Klebstoffaufbringeinheit, die einen Klebstoff auf einen vorgegebenen Bereich der oberen Fläche des Blatts aufbringt, das an der Anlageausrichtungsposition anliegt; und
ein Anlageunterstützungselement (1032), das in einer gleichen Drehwelle wie die Drehschaufel angeordnet ist,
wobei die Blattbindungsvorrichtung **dadurch gekennzeichnet ist, dass** das Anlageunterstützungselement eine Länge hat, um ein Spitzenende des Blatts während einer Zeit zwischen einem Spitzenende des Anlageunterstützungselements und der Drehschaufel einzuschieben, bis das Spitzenende des Blatts, das von der Drehschaufel in Richtung der Anlageausrichtungsposition befördert wird, wenigstens auf einem Bereich des Klebstoffs, der auf das auf der Bearbeitungsablage gestapelte Blatt aufgebracht ist, unmittelbar vor dem Blatt entlang gleitet.

2. Vorrichtrung nach Anspruch 1,
wobei das Anlageunterstützungselement eine Dünnschicht ist, die einfacher von dem Klebstoff getrennt wird als das Blatt.

3. Vorrichtung nach Anspruch 1 oder 2,
wobei das Anlageunterstützungselement in der Drehwelle bereitgestellt ist, um in Bezug auf eine Radialrichtung der Drehwelle in Richtung einer laufaufwärtigen Seite in einer Drehrichtung der Drehschaufel gekrümmt zu werden.

4. Vorrichtung nach Anspruch 1 oder 2,
wobei das Anlageunterstützungselement in der Drehwelle bereitgestellt ist, um in Bezug auf eine Radialrichtung der Drehwelle in Richtung einer laufaufwärtigen Seite in einer Drehrichtung der Drehschaufel geneigt zu werden.

5. Vorrichtung nach einem der Ansprüche 1 bis 4,
wobei das Anlageunterstützungselement an einer Position bereitgestellt ist, die einem Klebstoffaufbringbereich der Klebstoffaufbringeinheit in einer Richtung der Drehwelle entspricht.

6. Vorrichtung nach einem der Ansprüche 1 bis 5, die ferner umfasst:
eine vorübergehende Ablage (104), welche oberhalb der Bearbeitungsablage bereitgestellt ist, welche das beförderte Blatt vorübergehend darauf anordnet und welche das vorübergehend angeordnete Blatt auf die Bearbeitungsablage fallen lässt; und
ein Unterstützungselement (1031), das auf der Drehwelle (1031) bereitgestellt ist und das ein Spitzenende des Blatts hält, das vorübergehend auf der vorübergehenden Ablage angeordnet ist,
wobei das Anlageunterstützungselement auf einer Seitenfläche auf einer laufaufwärtigen Seite des Unterstützungselements in der Drehrichtung der Drehschaufel bereitgestellt ist.

7. Vorrichtung nach einem der Ansprüche 1 bis 6,
wobei das Anlageunterstützungselement eine dünne Polyesterschicht ist.

## Revendications

1. Dispositif de reliure de feuille comprenant :
un plateau de traitement (102) sur lequel une feuille destinée à la reliure est empilée ;
une palette tournante (103', 1030,1033) qui amène la feuille en butée contre une position d'alignement en butée prédéterminée sur le plateau de traitement, par rotation tout en entrant en contact avec une surface supérieure de la feuille empilée sur le plateau de traitement ;
une unité d'application d'adhésif qui applique un adhésif sur une zone prédéterminée de la surface supérieure de la feuille en butée contre la position d'alignement en butée ; et
un élément d'assistance de mise en butée (1032) qui est disposé sur un même arbre tournant que la palette tournante, le dispositif de reliure de feuille étant **caractérisé en ce que** l'élément d'assistance de mise en butée présente une longueur telle qu'il permet d'interposer une extrémité finale de la feuille entre une extrémité finale de l'élément d'assistance de mise en butée et la palette tournante pendant un certain temps jusqu'à ce que l'extrémité finale de la feuille qui est transportée vers la position d'alignement en butée par la palette tournante porte au moins sur une zone de l'adhésif appliqué sur la feuille empilée sur le plateau de traitement immédiatement face à la feuille.

2. Dispositif selon la revendication 1,
dans lequel l'élément d'assistance de mise en butée est un film qui peut être séparé plus facilement de l'adhésif que la feuille.

3. Dispositif selon la revendication 1 ou 2,
dans lequel l'élément d'assistance de mise en butée est agencé sur l'arbre tournant de manière à être courbé vers un côté amont suivant un sens de rotation de la palette tournante par rapport à une direction radiale de l'arbre tournant.

4. Dispositif selon la revendication 1 ou 2,
dans lequel l'élément d'assistance de mise en butée est agencé sur l'arbre tournant de manière s'incliner vers un côté amont suivant un sens de rotation de la palette tournante par rapport à une direction radiale de l'arbre tournant.

5. Dispositif selon l'une quelconque des revendications 1 à 4,
dans lequel l'élément d'assistance de mise en butée est agencé à une position correspondant à une zone d'application d'adhésif de l'unité d'application d'adhésif suivant une direction de l'arbre tournant.

6. Dispositif selon l'une quelconque des revendications 1 à 5, comprenant, en outre :
un plateau temporaire (104) qui est agencé au-dessus du plateau de traitement, qui place temporairement la feuille transportée dessus, et qui laisse tomber la feuille placée temporairement sur le plateau de traitement ; et
un élément de support (1031) qui est agencé sur l'arbre tournant, et qui supporte une extrémité finale de la feuille qui est temporairement placée sur le plateau temporaire,
dans lequel l'élément d'assistance de mise en butée est agencé sur une surface latérale sur un côté amont de l'élément de support suivant le sens de rotation de la palette tournante.

7. Dispositif selon l'une quelconque des revendications 1 à 6, dans lequel l'élément d'assistance de mise en butée est un film de polyester.
